# EUROPEAN PATENT APPLICATION

(11) **EP 4 242 186 A1**
(43) Date of publication of application: **13.09.2023**
(21) Application number: 22160672.6
(22) Date of filing: 08.03.2022
(51) Int. Cl.: C04B 28/06, C04B 40/00

(54) **STABILIZED AQUEOUS COMPOSITION BASED ON BLOCKED CALCIUM SILICATE CEMENT FOR INITIATING SETTING AND HARDENING OF ALUMINOUS CEMENT COMPOSITIONS**

(71) Applicant: Hilti Aktiengesellschaft, 9494 Schaan (LI)
(72) Inventor: Whittaker, Mark, 86899 Landsberg am Lech (DE)
(74) Representative: Hilti Aktiengesellschaft Corporate Intellectual Property

(57) **Abstract**

The present invention pertains to a long-term stabilized aqueous initiator composition for initiating setting and hardening of aluminous cement compositions, comprising blocked calcium silicate cement and water; to a method for preparing the long-term stabilized aqueous initiator composition as well as to the use of said composition in a system for chemical fastening of anchoring means in mineral substrates.

## Description

### FIELD OF THE INVENTION

The present invention pertains to a long-term stabilized aqueous initiator composition for initiating setting and hardening of aluminous cement compositions. In particular, the long-term stabilized aqueous initiator composition comprises blocked calcium silicate cement, and water. Moreover, the present invention pertains to a method for preparing the long-term stabilized aqueous initiator composition as well as to the use of said composition in a system for chemical fastening of anchoring means, preferably of metal elements, in mineral substrates, such as structures made of brickwork, concrete, pervious concrete or natural stone.

### BACKGROUND OF THE INVENTION

Aqueous compositions, in particular aqueous suspensions are heterogeneous mixtures containing solid particles that are sufficiently large for sedimentation and come in the form of more or less of a fluid or paste. The advantage of such suspensions is, that they form ready to use solutions to be directly employed in any application for construction chemistry, such as chemical fastening of anchoring means, preferably metal elements, such as anchor rods, in particular threaded rods, bolts, steel reinforcement bars or the like into recesses, such as boreholes, in mineral substrates, such as structures made of brickwork, concrete, pervious concrete or natural stone.

Organic systems based on free-radically polymerizable resins are used when fast curing is desired. However, such systems are generally known to be polluting, expensive, potentially hazardous and/or toxic for the environment and for the person who handles them and they often need to be specifically labelled.

In order to overcome these drawbacks, predominantly mineral systems based on aluminous cement have been developed. Aluminous cement has as its major constituent monocalcium aluminate and is widely used in the building and construction industries as the final products evidence a high level of mechanical performance over extended periods of time. Also, aluminous cement is resistant to bases and attains its maximum strength more rapidly than Portland cement and is capable of withstanding solutions of sulfates. Hence, aluminous cement systems are preferably employed in the field of chemical anchoring.

In particular, many two-component mortar systems, which are sometimes also referred to as kit-of-parts, exist, in which each of the components is intended to be mixed prior to use or during application in order to initiate the curing process to provide good chemical fastening of anchoring means in mineral substrates. One component provides for a stabilized cementitious composition which is then initiated by another component to set and harden.

Additives for setting and hardening of aluminous cement are known from the prior art. For example, US 3,826,665 describes an adjuvant composition for improving the setting and hardening properties of aluminous cement.

DE 2 311 239 describes an adjuvant composition for improving the setting and hardening properties of aluminous cement and mortar, comprising Lithia, a water-soluble lithium salt and a hydroxylated organic acid, or a salt or ester thereof. Said fluid is incorporated directly into the aluminous cement or into mortars and concretes during their manufacture or may be added to the mixing water during application. However, a disadvantage of this system lies within the fact that the activator composition cannot be stored for a sufficient time in order to be ready-for-use and hence has to be freshly prepared before use depending on desired setting and hardening times implying more procedural steps before application. Also, said lithium-based activator components are expensive, its harvesting often from a humanitarian, economic and political point of view problematic and has a high carbon-footprint.

When it comes to chemically fastening anchoring means in mineral substrates, a rapid curing time, i.e. of less than 5 minutes, is not always desired. Further, most of the known systems lack sufficient fluidity for most practical applications of the resultant compositions. Often such prior art compositions also evidence a tendency to crack in a relatively short time or do not exhibit the required mechanical performance, also under the influence of elevated temperatures. Moreover, these systems cannot be stored for a long time before use.

Therefore, there is a need for a long-term stabilized aqueous initiator composition for initiating setting and hardening of aluminous cement compositions, which is superior over the prior art systems with regard to environmental aspects, health and safety, handling, storage time and when applied a good balance between setting and hardening of the mortar. Moreover, it is of interest to provide a long-term stabilized aqueous initiator composition that can be used in a multiple-component system for chemical fastening of anchoring means in mineral substrates without adversely affecting the handling, characteristics and the mechanical performance of the chemical anchoring system. Further, it is of interest to reduces the employed water-to-cement ratio and conversion in a system, which leads to a decrease of performance over time.

In view of the above, it is an object of the present invention to provide a long-term stabilized aqueous initiator composition, which overcomes the disadvantages of the prior art compositions. In particular, it is an object to provide a long-term stabilized aqueous initiator composition that is ready-for-use, which can be handled easily and is eco-friendly, which can be stably stored for a certain period of time prior to use, which exhibits a good balance between setting and hardening when applied and still results in an excellent mechanical performance of the system when it comes to chemically fastening anchoring means, even under the influence of elevated temperatures and reduces the employed water-to-cement ratio and conversion in a system.

Furthermore, it is an object of the present invention to provide a method for preparing a long-term stabilized aqueous initiator composition that can be used in a multiple-component system, which is cost-effective, eco-friendly, simple to perform and results in a stable and easy to apply aqueous initiator composition.

Besides, it is also an object to provide a method for activating the setting and hardening of a curable aqueous-phase aluminous cement component, which can be performed easily resulting in a chemical anchor that can be used in the field of chemically fastening of anchoring means in mineral substrates.

Moreover, it is an object of the present invention to provide a long-term stabilized aqueous initiator composition that can be used in a multiple-component system, in particular in a two-component system for chemical fastening of anchoring means, preferably of metal elements, in mineral substrates, such as structures made of brickwork, concrete, pervious concrete or natural stone.

These and other objectives as they will become apparent from the ensuring description of the invention are solved by the present invention as described in the independent claims. The dependent claims pertain to preferred embodiments.

### SUMMARY OF THE INVENTION

In one aspect, the present invention provides a long-term stabilized aqueous initiator composition for initiating setting and hardening of aluminous cement compositions, which is stable at room temperature and at elevated temperatures over a certain time period. In particular, the long-term stabilized aqueous initiator composition comprises blocked calcium silicate cement and water.

In another aspect, the present invention provides a method for preparing said long-term stabilized aqueous initiator composition.

In yet another aspect, the present invention provides a method for activating the setting and hardening of a curable aqueous-phase aluminous cement component using the long-term stabilized aqueous initiator composition.

In yet another aspect, the present invention provides a long-term stabilized aqueous initiator composition that can be used in a multiple-component system, in particular in a two-component system for chemical fastening of anchoring means, preferably of metal elements, in mineral substrates, such as structures made of brickwork, concrete, pervious concrete or natural stone.

### DETAILED DESCRIPTION OF THE INVENTION

The following terms and definitions will be used in the context of the present invention:
As used in the context of present invention, the singular forms of "a" and "an" also include the respective plurals unless the context clearly dictates otherwise. Thus, the term "a" or "an" is intended to mean "one or more" or "at least one", unless indicated otherwise.

The term "aluminous cement" in the context of the present invention refers to a calcium aluminate cement that consists predominantly of hydraulic active calcium aluminates. Alternative names are "high-alumina cement" or "Ciment fondu" in French. The main active constituent of calcium aluminate cements is monocalcium aluminate (CaAl₂O₄, CaO · Al₂O₃, or CA in the cement chemist notation).

The term "shelf life" in the context of the present invention refers to the time during which a component stays in the form of a more or less fluid aqueous composition of solid products, capable of coming back to the aqueous-composition by mechanical means, without setting or losing its reactivity.

The term "initiator" in the context of the present invention refers to a compound or composition that modifies the chemical environment to start a particular chemical reaction. In the present invention the initiator modifies the pH-value of the mortar composition thereby de-blocking the hydraulic binder in the final mixture.

The term "binder" or "binder component" in the context of the present invention refers to the calcium-aluminate-based cementitious constituent and other additional optional components, such as for example fillers. In particular, the term "main binder component" refers to component A.

The term "siliceous clinker phase" refers to clinker phases tricalcium silicate C₃S or dicalcium silicate C₂S of ordinary Portland cement clinker, or a mixture thereof, whereby the siliceous clinker phase is essentially free of aluminate clinker phases and free of lime.

The term "stable" or "stabilized" in the context of the present invention means that the viscosity and pH-value of the aqueous initiator composition does not change much during storage and does the composition does not set or harden.

The term "long-term stabilized aqueous initiator composition" in the context of the present invention is also referred to as component B with regard to a two-component mortar system.

The term "water-to-cement ratio" in the context of the present invention refers to the ratio of (water) to (calcium aluminate cement plus siliceous clinker phase), i.e. w/CAC+C₂S, or w/CAC+C₃S, or w/CAC+C₂S+ C₃S.

It has been surprisingly found out by the inventors, that the long-term stabilized aqueous initiator composition based on blocked calcium silicate cement can be used to activate an aqueous slurry comprising blocked aluminous component as the main binder component in an inorganic mortar system.

While common calcium aluminate-based binders are relying on a carbonate-source that is either synthesized or mined, to buffer the strength loss by the conversion phenomenon, calcium silicate cement can be used as a binder. By blocking the calcium silicate cement with for example a sugar, like e.g. gluconate or glucose, in water, an alkaline pH is achieved that can be used to activate the blocked calcium aluminate cement component. Hence, there is no need for a separate activation agent like sodium or lithium hydroxide. The evolving alkaline pH from the calcium aluminate cement hydration is then activating the calcium silicate cement.

The present invention pertains to a long-term stabilized aqueous initiator composition comprising blocked calcium silicate cement and water.

The blocked calcium silicate cement of the long-term stabilized aqueous initiator composition comprises calcium silicate cement and a blocking agent.

In particular, the blocked calcium silicate cement comprises siliceous clinker phase tricalcium silicate C₃S, dicalcium silicate C₂S, or a mixture thereof, preferably the blocked calcium silicate cement is tricalcium silicate C₃S or dicalcium silicate C₂S. In a most preferred embodiment, the calcium silicate cement is tricalcium silicate C₃S or dicalcium silicate C₂S free of aluminate clinker phases and free of lime, most preferably is tricalcium silicate C₃S free of aluminate clinker phases and free of lime.

The long-term stabilized aqueous initiator composition of the present invention comprises at least about 5 wt.-%, preferably at least about 10 wt.-%, more preferably at least about 20 wt.-%, most preferably at least about 30 wt.-%, from about 5 wt.-% to about 95 wt.-%, preferably from about 10 wt.-% to about 90 wt.-%, more preferably from about 20 wt.-% to about 80 wt.-%, most preferably from about 30 wt.-% to about 75 wt.-% of calcium silicate cement, based on the total weight of the long-term stabilized aqueous initiator composition.

The blocking agent for the calcium silicate cement is selected from the group consisting of monosaccharides, carboxylic acid, gluconic acid, glycolic acid, lignosulfonates, phosphoric acid and phosphonic acid, salts and esters thereof, glucose, and mixtures thereof; preferably is glucose or sodium gluconate, most preferably is sodium gluconate.

The long-term stabilized aqueous initiator composition comprises at least about 0.01 wt.-%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.-% to about 15 wt.-%, most preferably from about 1.0 wt.-% to about 10 wt.-% of said blocking agent, based on the total weight of component B. In a most preferred embodiment, component B comprises from about 0.01 to about 0.4 wt.-% of sodium gluconate, based on the total weight of the long-term stabilized aqueous initiator composition.

The ratio of blocking agent:C₃S is preferably in a ratio of 1:300, more preferably of 1:500, and most preferably 1:1000.

The water content comprised in the long-term stabilized aqueous initiator composition is at least about 1 wt.-%, preferably at least about 5 wt.-%, more preferably at least about 10 wt.-%, most preferably at least about 20 wt.-%, from about 1 wt.-% to about 60 wt.-%, preferably from about 5 wt.-% to about 50 wt.-%, more preferably from about 10 wt.-% to about 40 wt.-%, most preferably from about 15 wt.-% to about 30 wt.-%, based on the total weight of the long-term stabilized aqueous initiator composition.

In an advantageous embodiment, the long-term stabilized aqueous initiator composition further comprises the following characteristics, taken alone or in combination.

The long-term stabilized aqueous initiator composition may further comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose,2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Cellosize^{™}, Acrysol ASE-60 (The Dow Chemical Company). The long-term stabilized aqueous initiator composition comprises at least about 0.01 wt.-%, preferably at least about 0.05 wt.-%, more preferably at least about 0.1 wt.-%, most preferably at least about 0.3 wt.-%, from about 0.01 wt.-% to about 15 wt.-%, preferably from about 0.05 wt.-% to about 10 wt.-%, more preferably from about 0.1 wt.-% to about 5 wt.-%, most preferably from about 0.1 wt.-% to about 1 wt.-% of said thickening agent, based on the total weight of the long-term stabilized aqueous initiator composition.

The long-term stabilized aqueous initiator composition may optionally comprise at least one mineral filler. The mineral filler which can be used in the present invention may be limestone fillers, such as calcites, sand, corundum, dolomite, alkaline-resistant glass, crushed stones, gravels, pebbles, quartz, quartz powder, quartz sand, clay, fly ash, fumed silica, brick flour, rice peel ash, phonolite, calcined clay and metakaolin, carbonate compounds, pigments, titanium oxides, light fillers or mixtures thereof. Suitable fillers are commercially available products. The long-term stabilized aqueous initiator composition may comprise at least about 1 wt.-%, preferably at least about 10 wt.-%, more preferably at least about 20 wt.-%, most preferably at least about 30 wt.-%, said at least one filler, based on the total weight of the long-term stabilized aqueous initiator composition. The at least one mineral filler comprised in the long-term stabilized aqueous initiator composition according to the present invention is preferably a mixture of mineral fillers.

The long-term stabilized aqueous initiator composition may also comprise also a plasticizer. The plasticizer may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products. Component B may comprise at least about 0.2 wt.-%, preferably at least about 0.3 wt.-%, more preferably at least about 0.4 wt.-%, most preferably at least about 0.5 wt.-%, from about 0.2 wt.-% to about 20 wt.-%, preferably from about 0.3 wt.-% to about 15 wt.-%, more preferably from about 0.4 wt.-% to about 10 wt.-%, most preferably from about 0.5 wt.-% to about 5 wt.-% of said plasticizer, based on the total weight of the long-term stabilized aqueous initiator composition.

The presence of a plasticizer and thickening agent does not change the overall inorganic nature of the long-term stabilized aqueous initiator composition.

Further, the long-term stabilized aqueous initiator composition, when used as an initiator for an aluminous cement component, may comprise an accelerator component. The accelerator component may be constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably the accelerator component is an alkali or earth alkaline metal salt, still preferably is a water-soluble alkali or earth alkaline metal salt, more preferably is a calcium metal salt, such as calcium hydroxide, calcium sulfate, calcium carbonate, calcium chloride, calcium formate or calcium phosphate, a sodium metal salt, such as sodium hydroxide, sodium sulfate, sodium carbonate, sodium chloride, sodium formate or sodium phosphate, or a lithium metal salt, such as lithium hydroxide, lithium sulfate, lithium sulfate monohydrate, lithium carbonate, lithium chloride, lithium formate or lithium phosphate, most preferably is lithium sulfate or lithium sulfate monohydrate. The long-term stabilized aqueous initiator composition may comprise at least about 0.01 wt.-%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.-% to about 15 wt.-%, most preferably from about 1.0 wt.-% to about 10 wt.-% of said accelerator, based on the total weight of the long-term stabilized aqueous initiator composition.

The long-term stabilized aqueous initiator composition comprising the initiator and retarder is present in aqueous-phase, preferably in form of a slurry or paste.

It is preferred that the pH-value of the long-term stabilized aqueous initiator composition is above 10, more preferably above 11 and most preferably is above 12, in particular in the range between 10 and 14, preferably between 11 and 13.

In a preferred embodiment, the long-term stabilized aqueous initiator composition comprises or consists of the following components:
45 wt.-% to 85 wt.-% of calcium silicate cement,
0.01 to 0.5 wt.-% of sodium gluconate, and
10 wt.-% to 35 wt.-% of water.

In a most preferred embodiment, the long-term stabilized aqueous initiator composition comprises or consists of the following components:
45 wt.-% to 85 wt.-% of C₃S free of aluminate clinker phases and free of lime,
0.01 to 0.5 wt.-% of sodium gluconate, and
10 wt.-% to 35 wt.-% of water.

The long-term stabilized aqueous initiator composition according to the present invention may be prepared as follows: calcium silicate cement and optionally filler(s), thickening agent, plasticizer are added to water whilst increasing the stirring speed until the mixture homogenizes. Finally, optionally accelerator component may be added until complete homogenization of the mixture. Hence, the method for preparing the long-term stabilized aqueous initiator composition according to present invention comprises the following steps:
i) introducing water into a mixing tank,
ii) optionally dissolving and adding the thickening agent and optionally plasticizer under stirring,
iii) dissolving and adding calcium silicate cement and optionally filler(s), whilst increasing stirring speed,
vi) continuing stirring until complete homogenization.

The long-term stabilized aqueous initiator composition was stored in tightly closed containers to avoid evaporation of water at ambient temperature and at 20°C and evaluated for any changes in fluidity, homogeneity (an indicator for sedimentation), and pH-value after several time intervals, i.e. after 1 week, 4 weeks, 3 months and 6 months. The properties of all components remained unaffected after 6 months, indicating a shelf life of at least 1 week, preferably of at least 4 weeks, more preferably of at least 3 months and most preferably of at least 6 months at ambient temperature up to 20°C.

The long-term stabilized aqueous initiator composition can be used in a method for activating the setting and hardening of a curable aqueous-phase aluminous cement component.

The method according to the present invention comprises the steps of:
i) adding the long-term stabilized aqueous initiator composition as described above to an aqueous-phase aluminous cement component, and
ii) mixing it.

Preferably, the cement component to which the long-term stabilized aqueous initiator composition can be added, is based on an aqueous-phase calcium aluminate cement (CAC) or an aqueous-phase calcium sulfoaluminate cement (CAS). The calcium aluminate cement which can be used is characterized by rapid set and rapid hardening, rapid drying and shrinkage compensation when mixed with calcium sulfates, excellent resistance to corrosion and shrinkage. Such a calcium aluminate cement suitable to be used is for example Ternal^{®} White (Kerneos, France).

In particular, the cement component may comprise at least about 40 wt.-%, preferably at least about 50 wt.-%, more preferably at least about 60 wt.-%, most preferably at least about 70 wt.-%, from about 40 wt.-% to about 95 wt.-%, preferably from about 50 wt.-% to about 90 wt.-%, more preferably from about 60 wt.-% to about 85 wt.-%, most preferably from about 70 wt.-% to about 80 wt.-% of calcium aluminate, based on the total weight of the cement component.

Alternatively, the cement component may comprise at least about 20 wt.-%, preferably at least about 30 wt.-%, more preferably at least about 40 wt.-%, most preferably at least about 50 wt.-%, from about 20 wt.-% to about 80 wt.-%, preferably from about 30 wt.-% to about 70 wt.-%, more preferably from about 35 wt.-% to about 60 wt.-%, most preferably from about 40 wt.-% to about 55 wt.-% of aluminous cement, based on the total weight of component A and at least about 5 wt.-%, preferably at least about 10 wt.-%, more preferably at least about 15 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-% of calcium sulfate, preferably calcium sulfate hemihydrate, based on the total weight of the cement component. The ratio of CaSO₄/CAC of said cement component should be less or equal to 35:65.

Preferably the cement component is blocked by a blocking agent selected from the group consisting of boric acid, carboxylic acid, phosphoric acid, metaphosphoric acid, phosphorous acid, phosphonic acids, and salts thereof. The amounts of aluminous cement and/or calcium sulfoaluminate cement by weight relative to the hydraulic binder total weight are higher than any of the following values: 50%, 60%, 70%, 80%, 90%, 95%, 99% or are 100%.

The cement component may further comprise the following characteristics, taken alone or in combination. The plasticizer which may be comprised in the cement component may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products.

The cement component may additionally comprise a thickening agent. The thickening agents which can be used may be selected from the group consisting of organic products, such as xanthan gum, welan gum or DIUTAN^{®} gum (CPKelko, USA), starchedderived ethers, guar-derived ethers, polyacrylamide, carrageenan, agar agar, and mineral products, such as clay, and their mixtures. Suitable thickening agents are commercially available products.

The cement component may further comprise an antibacterial or biocidal agent. The antibacterial or biocidal agents which can be used may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products. Exemplarily mentioned are Ecocide K35R (Progiven, France) and Nuosept OB 03 (Ashland, The Netherlands).

The cement component may also comprise at least one filler, in particular an organic or mineral filler. The filler may be selected from the group consisting of quartz powder, preferably quartz powder having an averaged grain size (d50%) of about 16 µm, quartz sand, clay, fly ash, fumed silica, carbonate compounds, pigments, titanium oxides, light fillers, and their mixtures. Suitable mineral fillers are commercially available products. Exemplarily mentioned is quartz powder Millisil W12 or W6 (Quarzwerke GmbH, Germany).

The water content comprised in the cement component may be at least about 1 wt.-%, preferably at least about 5 wt.-%, more preferably at least about 10 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-%, based on the total weight of the cement component.

The presence of a plasticizer, thickening agent as well as an antibacterial or biocidal agent does not change the overall inorganic nature of the cement component.

Further, the cement component may comprise an accelerator component. The accelerator component may be constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably the accelerator component is an alkali or earth alkaline metal salt, still preferably is a water-soluble alkali or earth alkaline metal salt, more preferably is a calcium metal salt, such as calcium hydroxide, calcium sulfate, calcium carbonate, calcium chloride, calcium formate or calcium phosphate, a sodium metal salt, such as sodium hydroxide, sodium sulfate, sodium carbonate, sodium chloride, sodium formate or sodium phosphate, or a lithium metal salt, such as lithium hydroxide, lithium sulfate, lithium sulfate monohydrate, lithium carbonate, lithium chloride, lithium formate or lithium phosphate, most preferably is lithium sulfate or lithium sulfate monohydrate. The cement component may comprises at least about 0.01 wt.-%, preferably at least about 0.05 wt.-%, more preferably at least about 0.1 wt.-%, most preferably at least about 1.0 wt.-%, from about 0.01 wt.-% to about 25 wt.-%, preferably from about 0.05 wt.-% to about 20 wt.-%, more preferably from about 0.1 wt.-% to about 15 wt.-%, most preferably from about 1.0 wt.-% to about 10 wt.-% of said accelerator, based on the total weight of the cement component.

The cement component to which the long-term stabilized aqueous initiator composition can be added, comprising the aluminous cement or calcium sulfoaluminate cement is preferably present in aqueous-phase, most preferably in form of a slurry or paste.

The long-term stabilized aqueous initiator composition according to the present invention is used in a mortar system comprising a curable aqueous-phase aluminous cement component. In particular, the long-term stabilized aqueous initiator composition is used as a first component in a two-component mortar system comprising a curable aqueous-phase aluminous cement component. Preferably, the use of the long-term stabilized aqueous initiator composition according to the present invention results in a two-component mortar system which has an initial set time of at least 5 min.

In particular, the long-term stabilized aqueous initiator composition according to the present invention is used for activating the setting and hardening of a curable aqueous-phase aluminous cement component used for chemical fastening of anchoring means in mineral substrates. Preferably, the anchoring means are anchor rods, threaded anchor rods, bolts or steel reinforcement bars. The mineral substrates in which the anchoring means are to be chemically fastened are structures made of brickwork, concrete, pervious concrete or natural stone.

Further, the long-term stabilized aqueous initiator composition according to the present invention may be used in an inorganic mortar system as a coating or for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements.

The following examples illustrate the invention without thereby limiting it.

### EXAMPLES

### 1. Preparation and heat output measurements of the long-term stabilized aqueous initiator composition

The long-term stabilized aqueous initiator composition is initially produced by mixing the siliceous clinker phase, blocking agent and water together.

Heat outputs associated with the hydration of the siliceous clinker phases tricalcium silicate (C₃S, monoclinic) and dicalcium silicates (α'-C₂S and β-C₂S) were measured using an 8 channel TA instrument TAMair calorimeter. For each measurement, always 3 g of the clinker phase (C₃S, α'-C₂S or β-C₂S) was mixed with 1.2 g of deionized (water/cement ratio = 0.4). The resultant paste was placed into glass vials, sealed, and lowered into the device to measure thermal outputs during the exothermic hydration of the cement, up to 7 days. All the clinker phases were ground to Blaine fineness of 400 cm²/g.

To measure the effect of the blocking agents identified, the blocking agents was weighed in amounts of either 0.1, 0.2 or 0.3% bwoc (by weight of the respective siliceous clinker phase). In a first step, the blocking agents were dissolved in deionized water. In a second step, the pastes were prepared with the dosed water, keeping the water/cement ratio = 0.4. Any trace of reactivity in the first days of reaction was followed by calorimetry; if no heat output was registered, then the reaction was deemed successfully blocked.

Further, the efficacy of a blocking agent was assessed for a period of 150 days. 10 g of paste dosed with the blocking agents were prepared as detailed above and sealed in glass vials. The pastes were assessed at regularly interval and the time at which the pasted hardened was recorded.

### Comparative Examples: Heat output measurements of the unblocked siliceous clinker phases

The heat outputs of the pure clinker phases reacting in water are summarized in Table 1. Comparative example 1 (C₃S) shows the highest heat output as early as 1 day (150.8 J/g). The dicalcium silicate clinker phases showed a much lower heat output, evolving only 43.6 and 36.0 J/g for the α' and the β polymorphs respectively.

**Table 1: Heat output of the unblocked siliceous clinker phases in water.**

| **Com. Ex.** # | **Siliceous clinker phase** | **Blocking agent** | **Heat output measured by calorimetry [J/g of paste]** | | | | |
|---|---|---|---|---|---|---|---|
| | | | **1 day** | **2 days** | **3 days** | **4 days** | **5 days** |
| **1** | C₃S | - | 150.8 | 184.0 | 203.4 | 217.8 | 228.6 |
| **2** | α'-C₂S | - | 7.7 | 26.0 | 36.8 | 43.6 | n.m. |
| **3** | β-C₂S | - | 23.1 | 29.3 | 33.3 | 36.0 | n.m. |

| | | | | | | | |
|---|---|---|---|---|---|---|---|
| n.m. = not measured | | | | | | | |

### Inventive Examples: Heat output measurements of siliceous clinker phases dosed with different amounts of blocking agent

Table highlights the total heat outputs of C₃S and C₂S dosed with different amounts of sodium gluconate. The heat output remains low at around 10 J/g for all clinker phases investigated and at all concentrations tested. This heat output is the result of exposing the sample chamber to the room temperature as the sample was introduced (as observed by the 10 min data point). At the end of the 7 days, all pastes prepared were still mixable by hand.

**Table 2: Heat output of the blocked siliceous clinker phases in water.**

| **Ex. #** | **Siliceous clinker phase** | **Blocking agent** | **Blocking agent dosaqe** | **Heat output measured by calorimetry [J/g of paste]** | | | | |
|---|---|---|---|---|---|---|---|---|
| | | | | **10 min** | **1 day** | **3 days** | **5 days** | **7 days** |
| **4** | C₃S | Sodium gluconate | 0.1% bwoc* | 8.5 | 10.3 | 10.9 | 11.4 | n.m.** |
| **5** | C₃S | Sodium gluconate | 0.2% bwoc* | 9.7 | 11.5 | 11.7 | 11.6 | n.m.** |
| **6** | C₃S | Sodium gluconate | 0.3% bwoc* | 9.6 | 11.2 | 11.2 | 11.1 | 11.0 |
| **7** | α'-C₂S | Sodium gluconate | 0.3% bwoc* | 9.0 | 10.6 | 10.4 | 10.1 | 10.0 |
| **8** | β-C₂S | Sodium gluconate | 0.3% bwoc* | 8.4 | 10.9 | 11.2 | 11.2 | 11.2 |

| | | | | | | | | |
|---|---|---|---|---|---|---|---|---|
| * bwoc = by weight of siliceous clinker phase **n.m. = not measured | | | | | | | | |

### Inventive Examples: Heat output of siliceous clinker phase tricalcium silicate dosed with different blocking agents

Several blocking agents were identified and tested to rank their efficacy in blocking the hydration of C₃S, the results of which are detailed in **Error! Reference source not found..** Of all those tested, sodium gluconate, glucose, phosphonate and glycolic acid all blocked successfully the hydration of tricalcium silicate C₃S for at least 7 days, e.g. low outputs were measured and the pastes could still be mixed. Lignosulfonate and phosphate, however, only delayed the hydration of the clinker phase.

**Table 3: Heat output of the blocked C₃S phase in water.**

| **Ex. #** | **Siliceous clinker phase** | **Blocking agent** | **Blocking agent dosage** | **Heat output measured by calorimetry [J/g of paste]** | | | | |
|---|---|---|---|---|---|---|---|---|
| | | | | **10 min** | **1 day** | **3 days** | **5 days** | **7 days** |
| **6** | C₃S | Sodium gluconate | 0.3% bwoc* | 9.6 | 11.2 | 11.2 | 11.1 | 11.0 |
| **9** | C₃S | Glucose | 0.3% bwoc* | 9.6 | 11.2 | 11.2 | 11.1 | 11.0 |
| **10** | C₃S | Lignosulfonate | 0.3% bwoc* | 7.8 | 9.7 | 10.7 | 243.9 | 288.5 |
| **11** | C₃S | Phosphate | 0.3% bwoc* | 8.9 | 20.4 | 111.8 | 269.5 | 290.7 |
| **12** | C₃S | Phosphonate | 0.3% bwoc* | 14.4 | 17.9 | 19.7 | 21.1 | 22.2 |
| **13** | C₃S | Glycolic acid | 0.3% bwoc* | 12.8 | 15.6 | 16.4 | 17.3 | 19.7 |

| | | | | | | | | |
|---|---|---|---|---|---|---|---|---|
| * bwoc = by weight of siliceous clinker phase | | | | | | | | |

### Long term blocking of C₃S

For all blocking agents tested, increasing their concentration relative the amount of clinker typically led to increased blocking time, with the exception of glycolic acid. For the same concentration of a blocking agent, fixed at 0.3% by weight of clinker, sodium gluconate, glucose and phosphonates were able to block the hydration of at least 3 months. In pastes prepared with 1% of the blocking agent by weight of clinker, the use of glucose and lignosulfonate did not lead to hardening of the paste in 150 days. The pastes prepared with phosphonates hardened after 120 days.

**Table 4: Blocking duration of C₃S with different blocking agents.**

| **Blocking agent** | **Blocking agent dosage** | **Hardened after** |
|---|---|---|
| Sodium gluconate | 0.1% bwoc* | 49 days |
| Sodium gluconate | 0.2% bwoc* | 98 days |
| Sodium gluconate | 0.3% bwoc* | 128 days |
| Glucose | 0.3% bwoc* | 98 days |
| Glucose | 1 % bwoc* | Not hardened |
| Lignosulfonate | 0.3% bwoc* | 3 days |
| Lignosulfonate | 1 % bwoc* | Not hardened |
| Phosphate | 0.3% bwoc* | 2 days |
| Phosphate | 1 % bwoc* | 7 days |
| Phosphonate | 0.3% bwoc* | 92 days |
| Phosphonate | 1 % bwoc* | 120 days |
| Glycolic acid | 0.3% bwoc* | 7 days |
| Glycolic acid | 1 % bwoc* | 7 days |

| | | |
|---|---|---|
| * bwoc = by weight of siliceous clinker phase | | |

### Long term blocking of C₂S

The efficacy of the blocking agents on α'-C₂S and β-C₂S are shown in Tables 5 and 6. With respect to α'-C₂S, sodium gluconate, glucose and phosphonates were very effective in blocking the hydration, with no hardening of the paste observed in the first 3 months.

**Table 5: Blocking duration of α'-C₂S with different blocking agents.**

| **Blocking agent** | **Blocking agent dosage** | **Hardened after** |
|---|---|---|
| Sodium gluconate | 0.3% bwoc* | Not hardened |
| Glucose | 0.3% bwoc* | Not hardened |
| Lignosulfonate | 0.3% bwoc* | 9 days |
| Phosphate | 0.3% bwoc* | 2 days |
| Phosphonate | 0.3% bwoc* | Not hardened |
| Glycolic acid | 0.3% bwoc* | 9 days |

| | | |
|---|---|---|
| * bwoc = by weight of siliceous clinker phase | | |

**Table 6: Blocking duration of β-C₂S with different blocking agents.**

| **Blocking agent** | **Blocking agent dosage** | **Hardened after** |
|---|---|---|
| Sodium gluconate | 0.3% bwoc* | 34 days |
| Glucose | 0.3% bwoc* | Not hardened |
| Lignosulfonate | 0.3% bwoc* | 9 days |
| Phosphate | 0.3% bwoc* | 9 days |
| Phosphonate | 0.3% bwoc* | Not hardened |
| Glycolic acid | 0.3% bwoc* | 9 days |

| | | |
|---|---|---|
| * bwoc = by weight of siliceous clinker phase | | |

With respect to C₃S, glucose, lignosulfonate and sodium gluconate were the most effective blocking agents. At 1 % dosage, lignosulfonate and sodium gluconate effectively stopped reaction for 150 days. With respect to α'-C₂S, extended blocking could be achieved at the concentration of 0.3% by weight of clinker when using sodium gluconate, glucose and phosphonate. With respect to β-C₂S, extended blocking could be achieved at the concentration of 0.3% by weight of clinker when using glucose and phosphonate.

### 2. Stability monitoring of the long-term stabilized aqueous initiator composition

The long-term stabilized aqueous initiator compositions, were stored in tightly closed containers to avoid evaporation of water at ambient temperature and at 20°C and evaluated for any changes in fluidity, homogeneity, and pH-value after several time intervals, i.e. after 1 week, 4 weeks, 3 months and 6 months. Initiation capacity has also been tested.

Measuring the pH value is a good way to monitor the stability of an aqueous composition, i.e. suspension. The long-term stabilized aqueous initiator composition is considered to be unstable if its pH value significantly changes.

Evaluation of homogeneity is a good way to monitor the stability of an aqueous composition, i.e. suspension. The long-term stabilized aqueous initiator composition is considered to be unstable if it starts to harden and to sediment. Evaluation of homogeneity is used as an indicator for sedimentation.

The properties of the inventive aqueous initiator compositions, in particular the properties of all components remained unaffected after 6 months, thus the shelf life is at least 6 months at ambient temperature and at a temperature of 20°C. The pH value stayed above 12. Initiation capacity remained fully compared to freshly produced components.

### 3. Initiation of a curable aqueous-phase aluminous cement component

The initiation capacity of the long-term stabilized aqueous initiator composition of the present invention was evaluated by activating the setting and hardening of a curable aqueous-phase aluminous cement component, comprising the steps of adding the long-term stabilized aqueous initiator compositions B1 and B2 to an aqueous-phase aluminous cement component (composition A, Table 7), and mixing it.

The aqueous-phase aluminous cement component (A) is initially produced by mixing the constituents specified in Table 7. The proportions that are given are expressed in wt.-%.

In particular, 19.86 grams deionized water, 0.75 grams of 85% phosphoric acid (blocking agent), 0.6 grams Ethacryl G (superplasticizer), and 0.015 grams Nuosept^{®} (biocide) were homogenized at room temperature, and whilst stirring with a dissolver, the calcium aluminate cement (78.28 grams, pure Ternal White^{®}) is added in subsequent small portions, to obtain finally a smooth, liquid pasty slurry of the blocked cement in water, the pH being below 7. After addition of the calcium aluminate cement, 0.5 grams xanthan gum (thickener) were added and the slurry was homogenized, at 2000 rpm it for 5 min.

**Table 7: Composition of binder component A.**

| **Ingredients** | **Binder component A** |
|---|---|
| Water | 19.855 |
| Ternal White | 78.280 |
| 85% H₃PO₄ | 0.750 |
| Xanthan Gum | 0.500 |
| Ethacryl G | 0.600 |
| Nuosept | 0.015 |

| | |
|---|---|
| Phosphoric acid 85% marketed by Sigma-Aldrich Chemie GmbH, Germany Ternal White^{®} marketed by Kerneos S.A., France Xanthan Gum marketed by Colltec GmbH & CO. KG, Germany Nuosept OB 03 marketed by Ashland Nederland B.V., The Netherlands Ethacryl G marketed by Coatex, Arkema Group, France | |

An exemplary preparation of component B is as follows: tricalcium silicate (C₃S), water and sodium gluconate were mixed and homogenized. The blocked silicate slurries had a pH ~ 12.

**Table 8: Composition of initiator component B.**

| **Ingredients** | **Component B1** | **Component B2** |
|---|---|---|
| Water | 28.55 | 28.51 |
| Tricalcium Silicate | 71.38 | 71.28 |
| Sodium gluconate | 0.07 | 0.21 |

| | | |
|---|---|---|
| Sodium gluconate marketed by Jungbunzlauer GmbH, Germany C₃S was lab-produced by calcining CaO and SiO₂ in stoichiometric ratios of 3:1 at 1600°C for 2 hours and was subsequently quenched. The monoclinic polymorph was stabilised by doping the raw CaO and SiO₂ meal with MgO. | | |

### Calorimetric observations

Mixtures of the silicate and aluminate mortars were prepared such to vary C₃S/CA ratio according to **Error! Reference source not found..** Extra water was added as to fix the water/(C₃S+CA) ratio at 0.4 and the mortars were mechanically mixed in a speed-mixer. Details of the mixes, the ratio of the two slurries A:B by weight and their overall C₃S:CAC ratios are shown in Table 9.

**Table 9:**

| **Example** | **Components** | **A:B ratio** | **% C₃S** | **% CAC** |
|---|---|---|---|---|
| 1 | A | - | | |
| 2 | B2 | - | | |
| 3 | A + B1 | 5:1 | 85 | 15 |
| 4 | A + B1 | 2.5:1 | 70 | 30 |
| 5 | A + B2 | 5:1 | 85 | 15 |
| 6 | A + B2 | 2.5:1 | 70 | 30 |
| 7 | A + B2 | 1:2.5 | 30 | 70 |
| 8 | A + B2 | 1:5 | 15 | 85 |

The potential of reactivating the cement binder by combining the two blocked systems is measured by the heat output of the hydration. The dissolution of clinker phases is exothermic and measuring heat output is favorable to follow hydration. All masses were hard by the end of testing (7 days) indicating that they can be used for fastening of anchoring means. The heat outputs are summarized in Table 10.

**Table 10: Heat outputs after 1, 3, 5 and 7 days of hydration.**

| **Example** | **Heat output of hydration [J/g]** | | | |
|---|---|---|---|---|
| | **1 day** | **3 days** | **5 days** | **7 days** |
| 1 | 2.05 | 2.19 | 2.20 | 1.99 |
| 2 | 12.9 | 13.04 | 12.96 | 12.97 |
| 3 | 24.6 | 33.6 | 56.4 | 82.0 |
| 4 | 32.6 | 48.2 | 94.1 | 173.2 |
| 5 | 11.9 | 17.1 | 22.8 | 28.7 |
| 6 | 23.1 | 47.1 | 73.2 | 98.1 |
| 7 | 14.6 | 19.4 | 46.2 | 148.0 |
| 8 | 14.8 | 101.3 | 209.3 | 223.5 |

Table 10 shows the influence of the blocking agent (sodium gluconate) dosage on the total heat output of C₃S rich blends. It can already be seen that for a fixed C₃S/CAC ratio, comparing Example 3 with Example 5, and Example 4 with Example 6, increasing the amount of blocking agent leads to a lower heat output by 7 days of hydration, meaning that less reaction has occurred in that time period, leading to lower load values at early ages. For a fixed blocking agent/C₃S ratio, comparing Example 3 with Example 4, and Example 5 with Example 6, increasing the C₃S fraction in the system leads to a reduced heat output of the mortar. However, there is an increase in the heat and the masses hardened.

The heat output of mortars with varying ratios of C₃S to CAC blends, with the blends varying from 85% C₃S down to 15% C₃S, are also shown in 10. In a blend containing 85% C₃S, the lowest heat output was recorded by 7 days. As the C₃S fraction was replaced with the calcium aluminate fraction, the heat output by the 7^{th} day continuously increased.

The addition of the inventive aqueous initiator compositions to the aqueous-phase aluminous cement component resulted in a in mortar system having an initial set time of at least 5 min, in particular in the range of from about 5 to 25 min.

It has been shown that the aqueous initiator composition of the present invention has a high lifetime, i.e. shelf life, that is to say the aqueous initiator composition does not set when stored at ambient temperature, for a period ranging from a couple of weeks to several months, i.e. of at least 1 week, preferably of at least 4 weeks, more preferably of at least 3 months and most preferably of at least 6 months at ambient temperature, so as to be protected against any storage or delivery delay. The aqueous initiator composition of the present invention remains in a slurry state and does not segregate, especially during transport, so that the implementation on site can be guaranteed. Moreover, the composition is poorly toxic and ecotoxic.

Once the curable aqueous-phase aluminous cement component has been initiated by the inventive aqueous initiator composition, it provides curing rates and hence mechanical strength comparable to those of the organic systems, but the essentially mineral composition thereof makes it far less toxic and very little polluting for the environment as well as allows for a more cost-effective production than of the known system of the prior art.

Further, it has been shown that a system based on an aqueous slurry comprising blocked aluminous component as the main binder component and blocked calcium silicate cement in an aqueous slurry exhibiting an alkaline pH as the second binder component, a lower water-to-cement ratio can be employed compared to state-of-the-art two component injection mortars that comprise an activator component based on lithium or fillers. Additionally, it has been demonstrated that the long-term strength reduction by conversion that is characteristic for calcium aluminate cements can be mitigated by blending these two cements, to produce the stable hydrates calcium-silicate-hydrate and portlandite phases.

Further, it has been shown that the mortar system comprising aqueous initiator composition the of the present invention does not contain any harmful substances whilst maintaining the standard for chemical anchoring applications, thereby also encompassing a reduced labelling.

## Claims

1. Long-term stabilized aqueous initiator composition comprising: blocked calcium silicate cement and water.

2. Long-term stabilized aqueous initiator composition according to claim 1, wherein the blocked calcium silicate cement comprises calcium silicate cement and a blocking agent for the calcium silicate cement is selected from the group consisting of monosaccharides, carboxylic acid, gluconic acid, glycolic acid, lignosulfonates, phosphoric acid and phosphonic acid, salts and esters thereof, glucose, and mixtures thereof.

3. Long-term stabilized aqueous initiator composition according to 2, wherein the calcium silicate cement is present in a range of from about 10 wt.-% to about 90 wt.-%, based on the total weight of the long-term stabilized aqueous initiator composition.

4. Long-term stabilized aqueous initiator composition according to any one of claims 2 or 3, wherein the blocking agent for the calcium silicate cement is present in a range of from about 0.01 wt.-% to about 10 wt.-%, based on the total weight of the long-term stabilized aqueous initiator composition.

5. Long-term stabilized aqueous initiator composition according to any one of claims 2 to 4, wherein the blocking agent is sodium gluconate.

6. Long-term stabilized aqueous initiator composition according to any one of claims 2 to 5, wherein the calcium silicate cement comprises siliceous clinker phase tricalcium silicate C₃S, dicalcium silicate C₂S, or a mixture thereof.

7. Long-term stabilized aqueous initiator composition according to any one of claims 2 to 6, wherein the calcium silicate cement is free of aluminate clinker phases and free of lime, most preferably is tricalcium silicate C₃S free of aluminate clinker phases and free of lime.

8. Long-term stabilized aqueous initiator composition according to any one of the preceding claims, wherein the aqueous initiator composition has a shelf life of at least six months.

9. Long-term stabilized aqueous initiator composition according to any one of the preceding claims, wherein the aqueous initiator composition is in form of a slurry or paste.

10. Long-term stabilized aqueous initiator composition according to any one of the preceding claims, wherein the aqueous initiator composition has a pH-value of above 10.

11. Long-term stabilized aqueous initiator composition according to any one of the preceding claims, wherein the aqueous initiator composition comprises
45 wt.-% to 85 wt.-% of C₃S free of aluminate clinker phases and free of lime,
0.01 to 0.5 wt.-% of sodium gluconate, and
10 wt.-% to 35 wt.-% of water.

12. A method for preparing the long-term stabilized aqueous initiator composition according to any one of the preceding claims, comprising the following steps:
i) adding the long-term stabilized aqueous initiator composition as described above to an aqueous-phase aluminous cement component, and
ii) mixing it.

13. A method for activating the setting and hardening of a curable aqueous-phase aluminous cement component, comprising the steps of:
i) introducing water into a mixing tank,
ii) dissolving and adding calcium silicate cement and optionally filler(s), whilst increasing stirring speed,
iii) continuing stirring until complete homogenization.

14. Use of the long-term stabilized aqueous initiator composition according to any one of claims 1 to 11 in a mortar system comprising a curable aqueous-phase aluminous cement component.

15. Use of the long-term stabilized aqueous initiator composition according to any one of claims 1 to 11 as a first component in a two-component mortar system comprising a curable aqueous-phase aluminous cement component.

16. Use of according to claim 15, wherein the two-component mortar system has an initial set time of at least 5 min.

17. Use of the long-term stabilized aqueous initiator composition according to any one of claims 1 to 11 for activating the setting and hardening of a curable aqueous-phase aluminous cement component used for chemical fastening of anchoring means in mineral substrates.
